# EUROPÄISCHE PATENTSCHRIFT

(11) **EP 0 411 399 B1**
(45) Veröffentlichungstag und Bekanntmachung des Hinweises auf die Patenterteilung: **29.09.1993**
(21) Anmeldenummer: 90113816.4
(22) Anmeldetag: 19.07.1990
(51) Int. Cl.: B60H 1/00

(54) **Verbindungseinrichtung für Klappen, insbesondere für Klappen einer Belüftungs- oder Klimaanlage für Kraftfahrzeuge**
Connecting arrangement for shutters, in particular ventilation or air-conditioning shutters of motorvehicles
Dispositif de connection pour volets, en particulier volets de systèmes de ventilation et de conditionnement d'air des véhicules automobiles

(30) Priorität: 03.08.1989 DE 8909363 U
(43) Veröffentlichungstag der Anmeldung: 06.02.1991
(73) Patentinhaber: Behr GmbH & Co., D-70469 Stuttgart (DE)
(72) Erfinder: Hezel, Gerhard, D-7149 Freiberg a.N. (DE); Siewert, Bernd, D-7143 Vaihingen/Enz 3 (DE); Scherzinger, Jürgen, Dipl.-Wirtsch.-Ing., D-7150 Backnang (DE)
(74) Vertreter: Dreiss, Fuhlendorf, Steimle & Becker, Patentanwälte

(56) Entgegenhaltungen:
- DE-U- 8 627 710
- US-A- 2 699 106
- US-A- 2 862 745
- PATENT ABSTRACTS OF JAPAN, Band 9, Nr. 330 (M-442)[2053], 25. Dezember 1985;& JP-A-60 161 212 (NISSAN JIDOSHA K.K.) 22-08-1985

## Beschreibung

Die Erfindung betrifft eine Verbindungseinrichtung für Klappen, insbesondere für Klappen einer Belüftungs- oder Klimaanlage für Kraftfahrzeuge, bei der zwei im Abstand zueinander jeweils innerhalb eines Belüftungskanals angeordnete Klappen vorgesehen sind, die über eine gemeinsame Betätigungswelle schlupffrei axial miteinander verbunden sind und über einen Betätigungshebel ansteuerbar sind.

Zum Verbinden zweier parallel zueinander angeordneten Klappen werden meist Vierkant-Wellen verwendet die eine torsionsfreie synchrone Kopplung der beiden Klappen ermöglicht. Bedingt durch den zwischen Welle und Klappen notwendigen leichten Preßsitz muß die Welle mit aufwendigen Betriebsmitteln wie bspw. einer pneumatischen Einschiebevorrichtung in die Klappen eingeschoben werden. Es werden somit unter anderem hohe axiale Kräfte erzeugt, die eine außermittige Position der Klappen in den Belüftungskanälen zur Folge haben können. Bei entsprechend großem Zwischenabstand zwischen den zu verbindenden Klappen müssen Vierkant-Stahlwellen verwendet werden, da leichtere und billigere Aluminiumwellen ab einem gewissen Längen-Durchmesserverhältnis beim Einschiebevorgang knicken können. Bedingt durch Fertigungs- oder Montagetoleranzen tritt das Problem auf, daß oft nur eine der Klappen ihre zugeordnete Stellung im Belüftungskanal während dem Montagevorgang beibehält, während die andere Klappe eine asynchrone Stellung einnimmt. Auch ein Verzug des Gehäuses kann während dem Einschiebevorgang der Vierkant-Stahlwelle dazu führen, daß die Klappen in den Belüftungskanälen nicht dicht abschließend aufgenommen sind.

Bei axial betätigten Klappen ist es bekannt (DE-U-86 27 710), daß durch Teilung der Betätigungswelle und Vorsehen eines Kupplungsgliedes, die Winkelstellung der Klappen zueinander während der Montage eingestellt werden kann. Ein Einpressen der freien Enden der Betätigungswelle in den Klappen über einen relativ langen Einpreßweg ist dennoch erforderlich um eine paßgenaue Verbindung der Betätigungswelle mit den Klappen zu erreichen.

Der vorliegenden Erfindung liegt die **Aufgabe** zugrunde, eine Verbindungseinrichtung für Klappen der eingangs genannten Art so auszubilden, daß eine einfache Montage der Betätigungswelle mit den Klappen möglich ist, wobei weitestgehend auf spezielle Montageeinrichtungen verzichtet werden kann und falls erforderlich, eine begrenzte Justierung der Klappen zueinander möglich ist.

Zur **Lösung** dieser Aufgabe ist vorgesehen, daß die Klappen jeweils ein Aufnahmeelement aufweisen, in die die Enden der Betätigungswelle axial ausgerichtet sowie unverschieblich und verdrehfest verspannbar sind, wobei mindestens eines der Aufnahmeelemente bzgl. der zugehörigen Klappe begrenzt axial bewegbar angeordnet ist, und daß bei Eingriff beider Enden der Betätigungswelle in die zugehörigen Aufnahmeelemente die Klappen axial torsionsfest gekoppelt sind und das verschiebbare Aufnahmeelement in der zugehörigen Klappe gegen axiale Bewegung gesichert ist. Hierdurch ist es möglich, die Betätigungswelle von Hand in die Klappen einzuschieben, wobei die Enden der Betätigungswelle mit einem leichten Spielsitz in den Aufnahmeelementen zum Liegen kommen, und erst nach kurzem Eindrücken des beweglichen Aufnahmeelements in das zugehörige Ende der Betätigungswelle beide Enden in den Aufnahmeelementen axial ausgerichtet sowie unverschieblich und verdrehfest verspannt werden. Vor dem kann eine begrenzte Verdrehung der Klappen zur Justierung untereinander erfolgen, da erst nach Eindrücken des verschiebbaren Aufnahmeelements eine radiale sowie axiale selbsttätige Verspannung der Enden der Betätigungswelle in den Aufnahmeelementen stattfindet. Aufgrund der niedrigen Eindrückkräfte zur Sicherung der Enden der Betätigungswelle in den Klappen, können Vierkant-Wellen aus Aluminium verwendet werden, wodurch sowohl eine Gewichtsreduzierung als auch eine Kostenreduktion erreicht wird. Eine weitere Reduktion in den Kosten wird durch die einfache Handhabung bei der Montage sowie durch den Wegfall von speziellen Einschiebevorrichtungen erreicht.

Besonders vorteilhaft ist es, daß das Aufnahmeelement büchsenförmig ist und öffnungsseitig eine im Querschnitt sich verengende axiale Zentrierausnehmung und daran anschließend eine Spannausnehmung mit konstantem Querschnitt aufweist, die die gleiche Querschnittsform wie die Enden der Betätigungswelle besitzt, da hierdurch mit nur einem Element sowohl eine axiale Ausrichtung als auch Einspannung der Betätigungswelle in der Klappe möglich ist. Zur Aufnahme und Befestigung der Aufnahmeelemente in den Klappen können eine in Klappenebene verlaufende axiale Hohlwelle aufweisen, in die jeweils eines der Aufnahmeelemente insbesondere formschlüssig aufnehmbar und ggf. verspannbar ist. Dies gewährleistet eine einfache und sichere Verbindungsart zwischen Klappe und Aufnahmeelement.

Dadurch daß die Spannausnehmung der Aufnahmeelemente mit den Enden der Betätigungswelle eine leichte Preßpassung bilden, wird erreicht, daß keine zusätzlichen Verspannungselemente bspw. in Form von Schrauben vorgesehen werden müssen, mittels der die Enden der Betätigungswelle im Aufnahmeelement verspannt werden müssen. Durch die Wahl einer Konushülse mit gleicher Querschnittsform wie die Enden der Betätigungswelle als Zentrierausnehmung wird zudem erreicht, daß durch einfaches Hineinschieben der Enden in die Aufnahmeelemente eine selbsttätige axiale Ausrichtung der Teile zueinander stattfindet.

Um getrennte Befestigungselemente zur Sicherung des Aufnahmeelements in der Hohlwelle zu vermeiden, ist vorgesehen, daß der Aufnahmebereich der Hohlwelle und das jeweilige Aufnahmeelement querschnittsähnlich sein können und gegebenenfalls leichte Preßpassung zueinander aufweisen können.

Um auch bei Herstellungstoleranzen eine verdrehsichere Verbindung zwischen Aufnahmeelement und Hohlwelle zu gewährleisten, kann vorgesehen sein, daß der Aufnahmebereich der Hohlwelle und das jeweilige Aufnahmeelement querschnittsähnlich sind und eine enge Spielpassung aufweisen können, wobei ferner das Aufnahmeelement Spannelemente aufweisen kann, insbesondere in Form von mindestens zwei Spannzungen, die durch axial über einen Teillängsbereich der Wandung des Aufnahmeelements verlaufende Schlitze begrenzt sind, so daß das bei eingeschobenen Enden der Betätigungswelle in die jeweilige Spannausnehmung der Aufnahmeelemente eine leichte Preßpassung zwischen den Spannzungen und der Innenwandung der Hohlwelle besteht. Eine genaue axiale Ausrichtung des Spannelements in der Hohwelle wird dadurch erreicht, daß vier Spannzungen vorgesehen sein können, die regelmäßig am Umfang angeordnet für eine gleichmäßige Pressung und somit Ausrichtung des Aufnahmeelements in der Hohlwelle sorgen.

Zur Erhöhung des Reibungskoeffizienten zwischen den Mantelflächen der Aufnahmeelemente und des Aufnahmebereichs der Hohlwellen, können diese angerauht sein.

Um das bewegliche Aufnahmeelement innerhalb der Hohlwelle auf das zugehörige Ende der Betätigungswelle aufzuschieben, so daß bei weiterer Zustellung beide Enden der Betätigungswellen in der jeweiligen Spannausnehmung der Aufnahmeelemente zum Liegen kommen und somit die torsionsfeste Kopplung der Klappen erfolgt, ist vorgesehen, daß der Betätigungshebel einen Koppelzapfen aufweisen kann, der durch eine Kanalwandung des Belüftungskanals in den Aufnahmebereich der Hohlwelle axial eingreift und in diesem sicherbar und ggf. verspannbar ist und ferner der Koppelzapfen stirnseitig in Anlage mit dem zugehörigen Aufnahmeelement bringbar ist, so daß bei voll eingeschobenem Betätigungshebel die Enden der Betätigungswelle in den Aufnahmeelementen drehfest verpannt sind.

Eine besonders einfache Ausgestaltung sieht vor, daß der Betätigungshebel als integraler Bestandteil eines der Aufnahmeelemente vorgesehen sein kann, wobei der Koppelzapfen in rückwärtiger axialer Verlängerung der Bodenwandung des Aufnahmeelements angeordnet ist. Um den Betätigungshebel in der zugehörigen Klappe zusätzlich axial zu sichern, ist es vorteilhaft, daß der Koppelzapfen eine federnde Arretierzunge aufweisen kann, die am vorderen Ende mit einer Rückhaltenase versehen ist, die in eine zugeordnete Sicherungsausnehmung der Hohlwelle federnd einschnappbar ist.

Weitere vorteilhafte Ausgestaltungen sind in den Schutzansprüchen definiert und werden anhand des nachfolgend beschriebenen Ausführungsbeispiels näher erläutert. Es zeigen:
- Figur 1: eine schematische Draufsicht auf eine Wärmetauschereinheit einer Klimaanlage für Kraftfahrzeuge, die auf beiden Seiten mit durch Klappen verschließbare Belüftungskanäle versehen ist,
- Figur 2: einen Schnitt senkrecht zur Zeichenebene des in Figur 1 dargestellten Klappenmechanismus in größerem Maßstab,
- Figur 3: einen Schnitt entlang der Linie III-III der in Figur 2 dargestellten rechten Klappe mit zugehörigem Aufnahmeelement,
- Figur 4: einen Längsschnitt entlang der Linie IV-IV des in Figur 3 gezeigten Aufnahmeelements,
- Figur 5: einen Längsschnitt entlang der Linie V-V des in Figur 3 dargestellten Aufnahmeelements und
- Figur 6: eine der Figur 3 entsprechende andere Ausführungsform mit rechteckigem Außenquerschnitt.

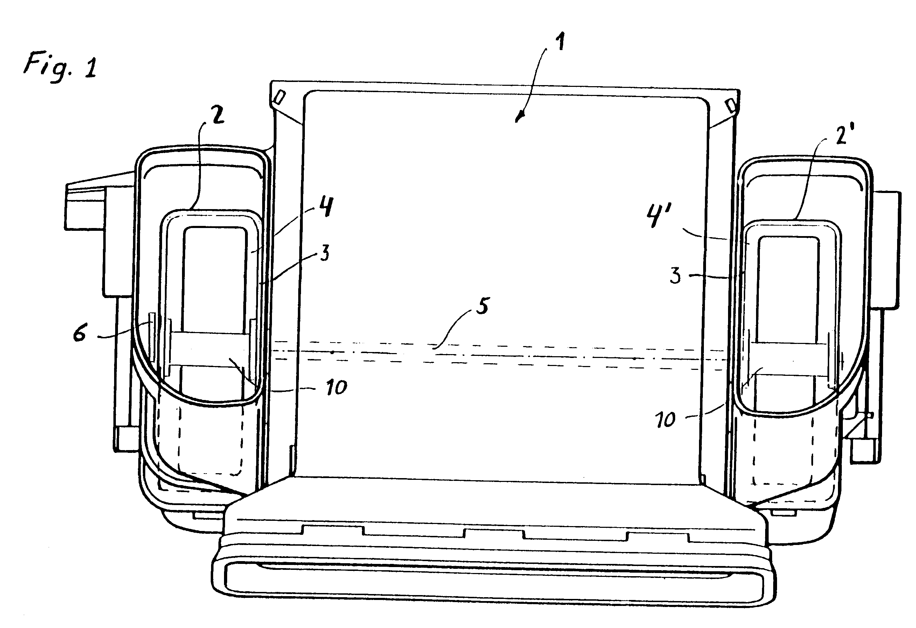

In der Figur 1 ist schematisch eine Klimaanlage 1 für Kraftfahrzeuge gezeigt, die einen Wärmetauscher und auf zwei Seiten einen Belüftungskanal 2, 2' aufweist. Durch diese kann gekühlte oder erwärmte Luft ins Fahrzeuginnere geführt werden. Die Belüftungskanäle 2, 2' weisen jeweils eine Klappe 4, 4' auf, durch die sie verschlossen werden können, und zwar so, daß bei einer Betätigung eines mit der Klappe 4 verbunden Betätigungshebels 6 beide Klappen 4, 4' über eine gemeinsame Betätigungswelle 5 gleichzeitig abdichten oder stufenlos öffnen. Um dies zu erreichen, ist die Betätigungswelle 5, die hier strichpunktiert angedeutet ist, mit ihren Enden formschlüssig innerhalb der Klappen 4, 4' aufgenommen.

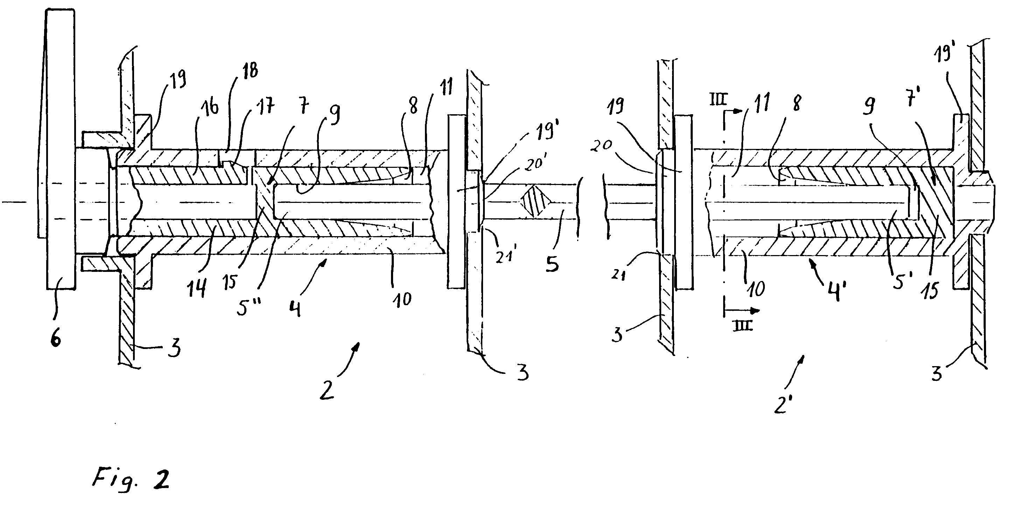

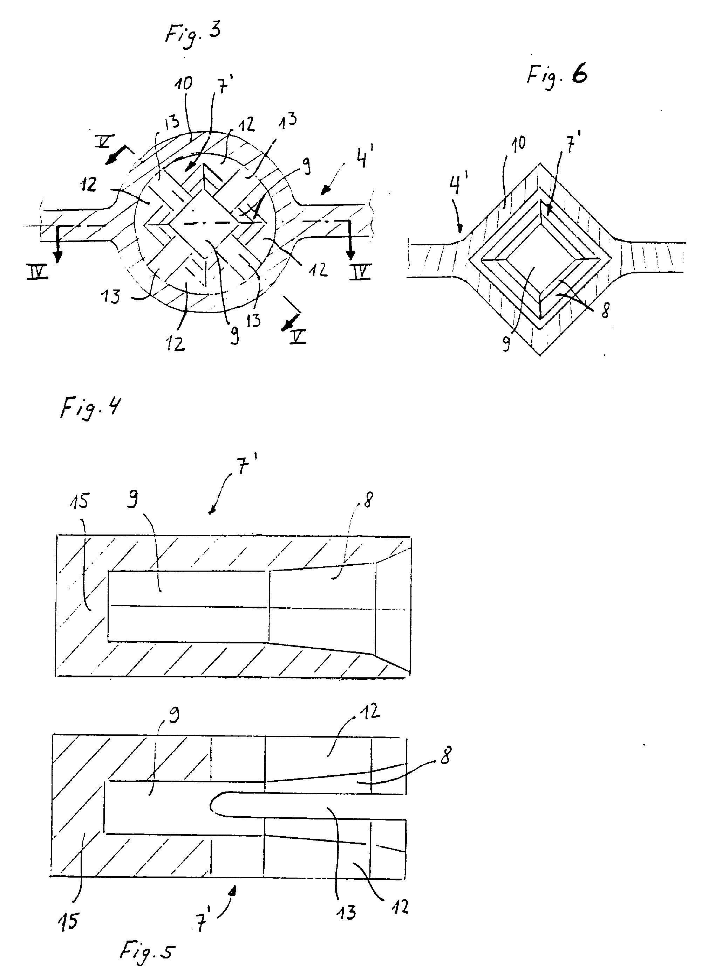

In Figur 2 ist ein schematischer Querschnitt durch den linken und rechten Belüftungskanal 2, 2' in größerem Maßstab gezeigt, um die Anordnung der Betätigungswelle 5, die hier in Form einer 4-Kant-Welle vorgesehen ist, innerhalb der Klappen 4, 4' näher zu erläutern. Die Klappen 4, 4' weisen jeweils eine in der Mitte der Klappe 4, 4' in Klappenebene liegende axiale Hohlwelle 10 auf, die beidseitig von entsprechend angeformten Stirnflanschen 19, 19' begrenzt ist und die mit zylindrischen Aufnahmezapfen 20, 20' versehen in entsprechenden Lagerbohrungen 21, 21' der Kanalwandungen 3 aufgenommen liegen. Hierdurch ist eine axial unverschiebare Anordnung der Klappen 4, 4' in den Belüftungskanälen 2, 2' gegeben. Die Hohlwelle 10 kann verschiedene Querschnittsformen aufweisen, wie dies bspw. für einen Kreisquerschnitt in Figur 3 oder für einen Vierecksquerschnitt in Figur 6 dargestellt ist. Innerhalb der rechten Klappe 4' ist im Aufnahmebereich 11 der Hohlwelle 10 ein Aufnahmeelement 7' formschlüssig aufgenommen, in das ein Ende 5' der Betätigungswelle 5 hineinragt und in diesem verspannt ist. Wie in Figur 3 und 6 gezeigt ist, weist das Aufnahmeelement 7' einen dem Aufnahmebereich 11 angepaßten Außenquerschnitt auf und kann, wie später näher erläutert wird, mit einer leichten Preßpassung oder einer engen Spielpassung darin aufgenommen liegen. Das Aufnahmeelement 7' ist büchsenförmig ausgeführt und weist öffnungsseitig eine im Querschnitt sich verengende axiale Zentrierausnehmung 8 auf, an die sich eine Spannausnehmung 9 mit konstantem Querschnitt anschließt. Die Querschnittsform sowohl der Spannausnehmung 9 als auch der Zentrierausnehmung 8 ist der Betätigungswelle 5 oder zumindest deren Enden 5', 5'' angepaßt. Zwischen der Spannaufnahme 9 und dem Ende 5' der Betätigungswelle 5 besteht eine leichte Preßpassung, so daß eine leichte und passgenaue Sicherung gegen axiale und radiale Verschiebung des Endes 5' in dem Aufnahmeelement 7' gegeben ist. Die Zentrierausnehmung 8 ist in Form einer sich in Richtung der Spannausnehmung 9 verengenden Konushülse ausgebildet.

Die linke Klappe 4 weist ebenfalls ein Aufnahmeelement 7 auf, welches das entsprechende linke Ende 5'' der Betätigungswelle 5 aufnimmt. In rückwärtiger Verlängerung der Bodenwandung 15 ist als integraler Bestandteil des Aufnahmeelements 7 der Betätigungshebel 6 mittels eines Koppelzapfens 14 angeformt, dieser weist die gleichen Querschnittsabmessungen wie das Aufnahmeelement 7 auf. Der Betätigungshebel 6 dient zur Übertragung der Öffnungs- oder Schließbewegung eines nicht dargestellten Betätigungselements auf die Klappen 4, 4'. Der Koppelzapfen 14 weist eine in dessen Wandung eingeschnittene Arretierzunge 16 auf, die an ihrem vorderen Ende eine radial von Koppelzapfen 14 abstehende Rückhaltenase 17 aufweist; die Rückhaltenase 17 greift in eine entsprechend ausgeformte Sicherungsausnehmung 18 der Wandung der Hohlwelle 10 ein. Somit ist eine axiale Verschiebesicherung des Betätigungshebels 6 innerhalb der Hohlwelle 10 gegeben, wobei die federnde Ausführung der Arretierzunge 16 es erlaubt, diese radial so weit einzudrücken, daß die Rückhaltenase 17 aus der Sicherungsausnehmung 18 gedrückt werden und der Betätigungshebel 6 wieder herausgezogen werden kann. In einer anderen Ausführungsform ist es auch denkbar, daß der Betätigungshebel 6 mit dem zugehörigen Koppelzapfen 14 ein zum Aufnahmeelement 7 getrenntes Bauteil bildet, wobei dann sichergestellt werden muß, daß der Koppelzapfen 14 im Aufnahmebereich 11 bspw. durch eine leichte Preßpassung radial unverschiebbar aufnehmbar ist und ferner bei fertig montiertem Klappenmechanismus, dieser mit der Bodenwandung 15 des daran angrenzenden Aufnahmeelements 7 stirnseitig in Anlage gebracht werden kann. Ferner ist es denkbar, daß das Aufnahmeelement 7', welches sich nicht in Eingriff mit dem Betätigungshebel 6 befindet, als integralen Bestandteil der Hohlwelle 10 auszubilden, so daß sowohl die Zentrierausnehmung 8 als auch die Spannausnehmung 9 innerhalb der Hohlwelle 10 direkt ausgebildet sind.

Zur Montage des Klappenmechanismus werden die zwei Klappen 4, 4' in die Aufnahmekanäle 2, 2' zwischen den Wandungen 3 eingebracht, wobei die rechte Klappe 4' bereits mit dem Aufnahmeelement 7' versehen wurde. Die Betätigungswelle 5 wird durch die linke Klappe 4 von Hand eingeführt und kommt in der Zentrierausnehmung 8 des rechten Aufnahmeelements 7' zum Liegen. Anschließend wird der Betätigungshebel 6 mit dem integrierten Aufnahmeelement 7 in die Hohlwelle 10 der linken Klappe 4 hineingeschoben, wobei eine axiale Ausrichtung, d.h. Zentrierung der Betätigungswelle 5 in den Zentrierausnehmungen 8 der Aufnahmeelemente 7, 7' erfolgt. Beim weiteren Hineinschieben des Betätigungshebels 6 werden über einen kurzen Eindrückweg die Enden 5', 5'' der Betätigungswelle 5 in die Spannausnehmungen 9 des jeweiligen Aufnahmeelements 7, 7' eingeschoben, so daß die Preßpassung zwischen den Teilen erreicht wird. Hierdurch ist die Betätigungswelle 5 axial ausgerichtet sowie unverschiebbar und verdrehfest in den Aufnahmeelementen 7, 7' verspannt; hierdurch und durch die zwischen Aufnahmeelement 7, 7' und Aufnahmebereich 11 bestehende formschlüssige Verbindung sind die Klappen 4, 4' mittels der Betätigungswelle 5 axial torsionsfest miteinander gekoppelt.

Um ein Verdrehen des Aufnahmeelements 7, 7' in dem Aufnahmebereich 11 bei Verwendung eines zylinderförmigen Aufnahmeelements 7, 7' zu vermeiden, besteht zwischen diesen Teilen eine Preßpassung. Um dies sicherzustellen, kann, wie dies bspw. anhand des Aufnahmeelements 7' in Figur 3, 4 und 5 dargestellt ist, das Aufnahmeelement (7), 7' radial wirkende Spannzungen 12 aufweisen. Diese werden durch radiale Schlitze 13 in der Wandung des Aufnahmeelements (7), 7' begrenzt, die axial über einen Teillängsbereich des Aufnahmeelements (7), 7' verlaufen. Die Schlitze 13 enden im Bereich der Spannausnehmung 9, so daß, wenn das Ende (5'') , 5' der Betätigungswelle 5 darin eingeschoben wird, eine leichte Spreizung der Spannzungen 12 stattfindet, wodurch diese an der innere Wandung der Hohlwelle 10 angepreßt werden. Das Vorsehen von Spannzungen 12 kann auch für im Querschnitt viereckig ausgeführte Spannelemente 7, 7' vorteilhaft sein, da durch das Vorhandensein der Spannzungen 12, insbesondere wenn diese regelmäßig am Umfang angeordnet sind, eine gleichmäßige Pressung der Aufnahmeelemente 7, 7' im Aufnahmebereich 11 der zugehörigen Hohlwelle 10 gewährleistet wird. Zur weiteren Erhöhung des Reibungskoeffizienten zwischen Aufnahmeelement 7, 7' und Aufnahmebereich 11 können die entsprechenden Wandungen der Teile angerauht sein, so daß die Verdrehbarkeit des Aufnahmeelements 7, 7' in der zugehörigen Hohlwelle 10 weiter vermindert wird. Bei Verwendung einer Betätigungswelle 5 mit kreisrundem Querschnitt können entsprechende Maßnahmen zur Erhöhung des Reibwiderstandes zwischen Spannausnehmung 9 und den Enden 5' , 5'' der Betätigungswelle 5 vorgenommen werden.

Aufnahmeelemente 7, 7' mit Spannzungen 12 und kreisrundem äußeren Querschnitt bringen einen weiteren Vorteil mit sich. Bevor der Koppelzapfen 4 des Betätigungshebels 6 ganz in der Hohlwelle 10 in seiner Endeinstecklage aufgenommen liegt und somit die volle Preßpassung zwischen den Enden 5', 5'' der Betätigungswelle 5 und den zugehörigen Spannausnehmungen 9 der Aufnahmeelemente 7, 7' sowie zwischen den Spannzungen 12 und der jeweiligen inneren Wandung der Hohlwelle 10 erreicht wird, können die Klappen 4, 4' mit geringem Kraftaufwand gegenseitig verdreht werden, so daß diese jeweils getrennt in ihre die Belüftungskanäle 2, 2' abdichtende Stellung gebracht werden können, wenn dann das Aufnahmeelement 7 bzw. der Koppelzapfen 14 mit dem Betätigungshebel 6 voll eingeschoben wird, ist die volle Preßpassung zwischen den einzelnen Teilen 5', 5'', 7, 7', 4, 4' erreicht und eine torsionsfeste Verbindung zwischen den Klappen 4, 4' gegeben.

## Patentansprüche

1. Verbindungseinrichtung für Klappen (4, 4'), insbesondere für Klappen (4, 4') einer Belüftungs- oder Klimaanlage für Kraftfahrzeuge, bei der zwei im Abstand zueinander jeweils innerhalb eines Belüftungskanals (2, 2') angeordnete Klappen (4, 4') vorgesehen sind, die über eine gemeinsame Betätigungswelle (5) schlupffrei axial miteinander verbunden und über einen Betätigungshebel (6) ansteuerbar sind, **dadurch gekennzeichnet**, daß die Klappen (4, 4') jeweils ein Aufnahmeelement (7, 7') aufweisen, in denen die Enden (5', 5'') der Betätigungswelle (5) axial ausgerichtet sowie unverschiebbar und verdrehfest verspannbar sind, wobei mindestens eines der Aufnahmeelemente (7) bzgl. der zugehörigen Klappe (4) begrenzt axial bewegbar angeordnet ist, und daß bei Eingriff beider Enden (5', 5'') der Betätigungswelle (5) in die zugehörigen Aufnahmeelemente (7, 7') die Klappen (4, 4') axial torsionsfest gekoppelt sind und das verschiebbare Aufnahmeelement (7) in der zugehörigen Klappe (4) gegen axiale Bewegung gesichert ist.

2. Verbindungseinrichtung nach Anspruch 1, dadurch gekennzeichnet, daß das büchsenförmige Aufnahmeelement (7, 7') öffnungsseitig eine im Querschnitt sich verengende axiale Zentrierausnehmung (8) und daran anschließend eine Spannausnehmung (9) mit konstantem Querschnitt aufweist, die die gleiche Querschnittsform wie die Enden (5', 5'') der Betätigungswelle (5) besitzen.

3. Verbindungseinrichtung nach Anspruch 1 oder 2, dadurch gekennzeichnet, daß das nicht verschiebbare Aufnahmeelement (7') mit der zugehörigen Klappe (4') einteilig ausgebildet ist.

4. Verbindungseinrichtung nach einem der Ansprüche 1 oder 2, dadurch gekennzeichnet, daß die Klappen (4, 4') eine in Klappenebene verlaufende axiale Hohlwelle (10) aufweisen, in die jeweils eines der Aufnahmeelemente (7, 7') insbesondere formschlüssig aufnehmbar und ggf. verspannbar ist.

5. Verbindungseinrichtung nach einem der Ansprüche 2 bis 4, dadurch gekennzeichnet, daß die Spannausnehmung (9) der Aufnahmeelemente (7, 7') mit den Enden (5', 5'') der Betätigungswelle (5) eine leichte Preßpassung bilden, und daß die Zentrierausnehmungen (8) in Form einer Konushülse, mit gleicher Querschnittsform wie die Enden (5', 5'') der Betätigungswelle (5), vorgesehen ist.

6. Verbindungseinrichtung nach einem der Ansprüche 4 oder 5, dadurch gekennzeichnet, daß der Aufnahmebereich (11) der Hohlwelle (10) und das jeweilige Aufnahmeelement (7, 7') querschnittsähnlich sind und gegebenenfalls eine leichte Preßpassung zueinander aufweisen.

7. Verbindungseinrichtung nach einem der Ansprüche 4 oder 5, dadurch gekennzeichnet, daß der Aufnahmebereich (11) der Hohlwelle (10) und das jeweilige Aufnahmeelement (7, 7') querschnittsähnlich sind und eine enge Spielpassung zueinander aufweisen, daß das Aufnahmeelement (7, 7') Spannelemente aufweist, insbesondere in Form von mindestens zwei Spannzungen (12), die durch axial über einen Teillängsbereich der Wandung des Aufnahmeelements (7, 7') verlaufende Schlitze (13) begrenzt sind, und daß bei eingeschobenen Enden (5', 5'') der Betätigungswelle (5) in der jeweiligen Spannausnehmung (9) der Aufnahmeelemente (7, 7') eine leichte Preßpassung zwischen den Spannzungen (12) und der Innenwandung der Hohlwelle (10) besteht.

8. Verbindungseinrichtung nach einem der Ansprüche 4 bis 7, dadurch gekennzeichnet, daß das Aufnahmeelement (7, 7') an dessen äußerer Mantelfläche und/oder die Hohlwelle (10) in den Aufnahmebereich (11) angerauhte Oberflächen zur Erhöhung des Reibungskoeffizienten zwischen beiden Teilen aufweisen.

9. Verbindungseinrichtung nach einem der Ansprüche 1 bis 8, dadurch gekennzeichnet, daß der Betätigungshebel (6) einen Koppelzapfen (14) aufweist, der durch eine Kanalwandung (3) des Belüftungskanals (2) in den Aufnahmebereich (11) der Hohlwelle (10) axial eingreift und in diesem sicherbar und ggf. verspannbar ist, daß der Koppelzapfen (14) stirnseitig in Anlage mit dem zugehörigen Aufnahmeelement (7) bringbar ist, und daß bei voll eingeschobenem Betätigungshebel (6) die Enden (5', 5'') der Betätigungswelle (5) in den Aufnahmeelementen (7, 7') verdrehfest verspannt sind.

10. Verbindungseinrichtung nach Anspruch 9, dadurch gekennzeichnet, daß der Betätigungshebel (6) als integraler Bestandteil eines der Aufnahmeelemente (7) vorgesehen ist, wobei der Koppelzapfen (14) in rückwärtiger axialer Verlängerung der Bodenwandung (15) des Aufnahmeelements (7) angeordnet ist.

11. Verbindungseinrichtung nach einem der Ansprüche 9 oder 10, dadurch gekennzeichnet, daß der Koppelzapfen (14) eine federnde Arretierzunge (16) aufweist, die am vorderen Ende mit einer Rückhaltenase (17) versehen ist, die in eine zugeordnete Sicherungsausnehmung (18) der Hohlwelle (10) federnd einschnappbar ist.

## Claims

1. A connecting means for hinged flaps (4, 4'), particularly for hinged flaps (4, 4') of a ventilating or air conditioning plant for motor vehicles in which two spaced apart hinged flaps (4, 4') disposed within a ventilating duct (2, 2') are provided and which are connected axially to each other in slip-free fashion via a common actuating shaft (5) and which can be actuated by an actuating lever (6), characterised in that the hinged flaps (4, 4') have in each case a receiving element (7, 7') in which the ends (5', 5'') of the actuating shaft (5) are adapted to be clamped in an axially aligned, non-displaceable and rotationally rigid manner whereby at least one of the receiving elements (7) for the associated hinged flap (4) is disposed for limited axial movement and in that upon engagement of the two ends (5',5'') of the actuating shaft (5) into the associated receiving elements (7, 7'), the hinged flaps (4, 4') are axially coupled in a torsionally rigid fashion, the displaceable receiving element (7) in the associated hinged flap (4) being secured against axial movement.

2. A connecting means according to Claim 1, characterised in that the socket-shaped receiving element (7, 7') has on the open side a cross-sectionally narrowing axial centring recess (8) and adjacent thereto a clamping recess (9) of constant cross-section, having the same cross-sectional form as the ends (5', 5'') of the actuating shaft (5).

3. A connecting means according to Claim 1 or 2, characterised in that the receiving element (7') which cannot be displaced is constructed in one piece with the associated hinged flap (4').

4. A connecting means according to one of Claims 1 or 2, characterised in that the hinged flaps (4, 4') have extending in the plane of the hinged flap an axial hollow shaft (10) into which it is possible to receive and perhaps to clamp in particular in form-locking manner one of the receiving elements (7, 7').

5. A connecting means according to one of Claims 2 to 4, characterised in that the clamping recess (9) in the receiving elements (7, 7') form a light press fit with the ends (5', 5'') of the actuating shaft (5) and in that the centring recesses (8) in the form of a conical sleeve have the same cross-sectional shape as the ends (5', 5'') of the actuating shaft (5).

6. A connecting means according to one of Claims 4 or 5, characterised in that the receiving area (11) of the hollow shaft (10) and the respective receiving element (7, 7') are similar in cross-section and may possibly have a slight press fit in respect of one another.

7. A connecting means according to one of Claims 4 or 5, characterised in that the receiving area (11) of the hollow shaft (10) and the relevant receiving element (7, 7') are of similar cross-section and have a narrow clearance in respect of each other and in that the receiving element (7, 7') comprises clamping elements particularly in the form of at least two clamping tongues (12) which are bounded by slots (13) extending axially over a part of the length of the wall of the receiving element (7, 7') and in that when the ends (5', 5'') of the actuating shaft (5) are pushed in, there is a slight press fit in the respective clamping recess (9) of the receiving elements (7, 7') between the clamping tongues and the inside wall of the hollow shaft (10).

8. A connecting means according to one of Claims 4 to 7, characterised in that the receiving element (7, 7') has on its outer surface and/or the hollow shaft (10) has in the receiving zone (11) roughened surfaces to enhance the friction coefficient between the two parts.

9. A connecting means according to one of Claims 1 to 8, characterised in that the actuating lever (6) comprises a coupling stud (14) which engages axially through a duct wall (3) of the ventilating duct (2) into the receiving zone (11) of the hollow shaft (10) and is adapted to be secured and possibly clamped in the said zone (11) and in that the coupling stud (14) can have its end face brought to bear on the associated receiving element (7) and in that when the actuating lever (6) is fully pushed in the ends (5', 5'') of the actuating shaft (5) are rotationally rigidly clamped in the receiving elements (7, 7').

10. A connecting means according to Claim 9, characterised in that the actuating lever (6) is provided as an integral constituent part of one of the receiving elements (7), the coupling stud (14) being disposed in a rearward axial extension of the end wall (15) of the receiving element (7).

11. A connecting means according to one of Claims 9 or 10, characterised in that the coupling stud (14) has a spring-action locking tongue (16) provided at its front end with a retaining nose (17) which can be snap-fitted into an associated locking recess (18) in the hollow shaft (10).

## Revendications

1. Dispositif de raccordement pour des volets (4, 4'), notamment pour des volets (4,4') d'une installation de ventilation ou de climatisation pour des véhicules automobiles, dans laquelle il est prévu deux volets (4,4') qui sont placés à distance l'un de l'autre, à l'intérieur de canaux respectifs de ventilation (2,2') et qui peuvent être raccordés axialement entre eux, sans glissement, par l'intermédiaire d'un arbre commun d'actionnement (5) et peuvent être commandés par l'intermédiaire d'un levier d'actionnement (6), caractérisé en ce que les volets (4,4') comportent des éléments respectifs de logement (7,7'), dans lesquels les extrémités (5',5") de l'arbre d'actionnement (5) sont alignées axialement et peuvent être serrées sans possibilité de translation et avec blocage en rotation, au moins l'un des éléments de logement (7) pour le volet associé (4) étant disposé de manière à être déplaçable axialement de façon limitée, et que lors de l'engagement des deux extrémités (5',5'') de l'arbre d'actionnement (5) dans les éléments de logement associés (7,7'), les volets (4,4') sont accouplés de manière à résister axialement à toute rotation, et que l'élément de réception translatable (7) est bloqué contre tout déplacement axial dans le volet associé (4).

2. Dispositif de raccordement selon la revendication 1, caractérisé en ce que l'élément de logement (7,7') en forme de douille comporte, du côté de son ouverture, une ouverture axiale de centrage (8), dont la section transversale se rétrecit, et, se raccordant à cette dernière, une cavité de serrage (9) possédant une section transversale constante et dont la forme est identique à celle des extrémités (5',5'') de l'arbre d'actionnement (5).

3. Dispositif de raccordement selon la revendication 1 ou 2, caractérisé en ce que l'élément de logement non translatable (7') est réalisé d'un seul tenant avec le volet associé (4').

4. Dispositif de raccordement selon l'une des revendications 1 ou 2, caractérisé en ce que les volets (4,4') possèdent un arbre axial creux (10) situé dans le plan du volet et dans lequel respectivement l'un des éléments de logement (7,7') peut être logé, notamment selon une liaison par formes complémentaires, et peut être éventuellement serré.

5. Dispositif de raccordement selon l'une des revendications 2 à 4, caractérisé en ce qu'il existe un ajustement serré léger entre les cavités de serrage (9) des éléments de logement (7,7') et les extrémités (5',5'') de l'arbre d'actionnement (5) et que les ouvertures centrales (8) sont réalisées sous la forme de douilles coniques possédant une forme en coupe transversale identique à celle des extrémités (5',5") de l'arbre d'actionnement (5).

6. Dispositif de raccordement selon l'une des revendications 4 ou 5, caractérisé en ce que la zone de logement (11) de l'arbre creux (10) et l'élément respectif de logement (7,7') possèdent des sections transversales identiques et qu'il existe éventuellement entre elles un ajustement serré léger.

7. Dispositif de raccordement selon l'une des revendications 4 ou 5, caractérisé en ce que la zone de logement (11) de l'arbre creux (10) et l'élément respectif de logement (7,7') ont des sections transversales identiques et qu'il existe entre elles un ajustement avec un faible jeu, que l'élément de logement (7,7') comporte des éléments de serrage, notamment sous la forme d'au moins deux languettes de serrage (12), qui sont limitées par des fentes (13) qui s'étendent axialement sur une partie de l'étendue en longueur de la paroi de l'élément de logement (7,7'), et que, lorsque les extrémités (5',5**''**) de l'arbre d'actionnement (5) sont insérées dans les cavités respectives de serrage (9) des éléments de logement (7,7'), il existe un ajustement serré léger entre les languettes de serrage (12) et la paroi intérieure de l'arbre creux (10).

8. Dispositif de raccordement selon l'une des revendications 4 à 7, caractérisé en ce que l'élément de logement (7,7') comporte, sur sa surface enveloppe extérieure et/ou l'arbre creux (10) comporte dans la zone de logement (11), des surfaces rugueuses servant à accroître le coefficient de frottement entre ces deux parties.

9. Dispositif de raccordement selon l'une des revendications 1 à 8, caractérisé en ce que le levier d'actionnement (6) possède un embout d'accouplement (14), qui s'engage axialement, à travers une paroi (3) du canal de ventilation (2), dans la zone de logement (11) de l'arbre creux (10) et peut être bloqué et éventuellement serré dans ce dernier, que l'embout d'accouplement (14) peut être appliqué frontalement contre l'élément de logement associé (7), et que lorsque le levier d'actionnement (6)est en position complètement rentrée, les extrémités (5',5'') de l'arbre d'actionnement (5) sont serrées avec blocage en rotation dans les éléments de logement (7,7').

10. Dispositif de raccordement selon la revendication 9, caractérisé en ce que le levier d'actionnement (6) est réalisé sous la forme d'une partie intégrante de l'un des éléments de logement (7), l'embout d'accouplement (14) étant disposé dans un prolongement axial arrière de la paroi (15) du fond de l'élément de logement (7).

11. Dispositif de raccordement selon l'une des revendications 9 ou 10, caractérisé en ce que l'embout d'accouplement (14) possède une languette élastique de blocage (16), qui comporte, à son extrémité avant, un bec de retenue (17), qui peut s'encliqueter élastiquement dans un évidement associé de blocage (18) de l'arbre creux (10).
